# EUROPÄISCHE PATENTSCHRIFT

(11) **EP 2 519 415 B1**
(45) Veröffentlichungstag und Bekanntmachung des Hinweises auf die Patenterteilung: **28.03.2018**
(21) Anmeldenummer: 10798507.9
(22) Anmeldetag: 11.12.2010
(51) Int. Cl.: B60H 1/00

(54) **KLIMATISIERUNGSSYSTEM FÜR EIN FAHRZEUG SOWIE VERFAHREN ZUM TEMPERIEREN**
CLIMATE CONTROL SYSTEM FOR A VEHICLE AND METHOD FOR CONTROLLING TEMPERATURE
SYSTÈME DE CLIMATISATION POUR UN VÉHICULE ET PROCÉDÉ DE THERMORÉGULATION

(30) Priorität: 30.12.2009 DE 102009060860
(43) Veröffentlichungstag der Anmeldung: 07.11.2012
(73) Patentinhaber: Voss Automotive GmbH, 51688 Wipperfürth (DE)
(72) Erfinder: SCHWARZKOPF, Otfried, 51515 Kürten (DE)
(74) Vertreter: Rebbereh, Cornelia
(86) Internationale Anmeldenummer: PCT/EP2010/007565
(87) Internationale Veröffentlichungsnummer: WO 2011/079904

(56) Entgegenhaltungen:
- EP-A1- 1 568 524
- EP-B1- 0 991 536
- DE-A1- 10 207 128
- DE-C1- 4 408 960
- US-A1- 2005 178 523
- US-A1- 2009 020 620

## Beschreibung

Die Erfindung betrifft ein Klimatisierungssystem für ein Fahrzeug mit zumindest einem Kältemittelkreis und zumindest einem Temperierkreislauf zum Temperieren eines Fahrzeuginnenraums und zumindest einer Fahrzeugkomponente, insbesondere eines Elektro- oder Hybridfahrzeugs, ein Verfahren zum Temperieren von Fahrzeugkomponenten unter Verwendung zumindest eines Kältemittelkreises und zumindest eines Temperierkreislaufs sowie ein Fahrzeug mit einem solchen Klimatisierungssystem.

Klimatisierungssysteme für Fahrzeuge sowie Verfahren zum Klimatisieren von Fahrzeuginnenräumen sind bekannt. Beispielsweise offenbart die EP 0 991 536 B1 eine Fahrzeugklimaanlage sowie ein Verfahren zum Erwärmen eines Kühlmittels eines Antriebsaggregats. Die Fahrzeugklimaanlage weist hierbei einen Kältemittelkreislauf, bestehend aus zumindest einem Kondensator, einem Expansionsorgan, einem Verdampfer, einem Kompressor und einer den Kondensator überbrückenden Bypassleitung sowie einem Bypassventil zum Öffnen und Schließen der Bypassleitung auf, wobei im Kältemittelkreislauf ein Wärmetauscher angeordnet ist, der einerseits vom Kältemittel und andererseits von einem Kühlmittel eines Antriebsaggregats beaufschlagt werden kann. Der Wärmetauscher im Kältemittelkreislauf ist zwischen dem Kompressor und dem Kondensator angeordnet. Zum Erwärmen des Kühlmittels des Antriebsaggregats wird über den Wärmetauscher durch Komprimieren des Kältemittels in dem Kompressor das Kältemittel auf einen höheren Druck gebracht, wodurch es sich erwärmt, somit Wärme erzeugt und von dem Kältemittel auf das Kühlmittel übertragen wird, zur schnelleren Aufheizung des Antriebsaggregats. Während der Aufheizphase des Kühlmittels wird der Kondensator überbrückt und die im Kompressor erzeugte Wärme entweder ausschließlich in dem Wärmetauscher auf das Kühlmittel oder durch den Verdampfer auf die durch den Verdampfer strömende Luft übertragen.

Aus der DE 102 07 128 A1 ist eine Fahrzeugklimaanlage, insbesondere CO₂-Klimaanlage, bekannt, deren Kältemittelkreislauf einen Verdichter, einen Kältemittelkühler, einen inneren Wärmetauscher zwischen Kühlmittelkühler und Verdampferseite, ein Expansionsventil und einen Verdampfer umfasst, wobei zum Umschalten der Klimaanlage vom Kühlbetrieb in den Heizbetrieb zwischen Verdichter und Kältemittelkühler ein mit einem motorseitigen Kühlkreislauf korrespondierender zusätzlicher Wärmetauscher integriert ist. Dem zusätzlichen Wärmetauscher ist ein Expansionsventil nachgeordnet, mittels dessen bei dem Heizbetrieb das Kältemittel auf einen niedrigeren Druck gedrosselt werden kann. Das zusätzliche Expansionsventil ist Teil einer von der Kältemittelleitung zwischen zusätzlichem Wärmetauscher und Kältemittelkühler abzweigenden Bypassleitung. Diese ist parallel zur Kältemittelleitung unter Überbrücken eines in dieser angeordneten Absperrventils geschaltet.

Aus der DE 44 089 60 C1 ist eine Vorrichtung zur Kühlung einer Traktionsbatterie, insbesondere für ein Elektrofahrzeug, bekannt. Hierbei ist ein Batteriekühlkreislauf vorgesehen, der einen luftgekühlten Wärmetauscher und eine batteriebetriebene Zirkulationspumpe aufweist. Ferner ist ein-Kühlaggregat mit einem batteriebetriebenen Kompressor, einem Kondensator, einem Expansionsventil und einem Verdampfer, der seriell zu einem Batteriekühlschlangenabschnitt und zum luftgekühlten Wärmetauscher in den Batteriekühlkreislauf, mit Letzterem in thermischem Kontakt stehend, eingebracht wird. Im Batteriekühlkreislauf ist zur Umgehung des luftgekühlten Wärmetauschers eine Bypassleitung vorgesehen, vor der ein Schaltventil angeordnet ist.

EP1568524 offenbart eine Vorrichtung nach dem Oberbegriff des Anspruchs 1.

Gerade Batteriesysteme für Hybrid-, Elektrofahrzeuge und Fahrzeuge mit Brennstoffzellenantrieb und Batterie bringen das Erfordernis mit sich, eine Temperierung der Batterie, also ein Erwärmen und ein Kühlen der Batterie, unabhängig von eventuell erzeugter Motorabwärme vorzusehen, da gerade bei Elektrofahrzeugen eine derartige Motorabwärme, wie sie bei Fahrzeugen mit Verbrennungsmotoren anfällt, nicht mehr auftritt. Bei Hybridfahrzeugen kann ggf. die Motorwärme zum Erwärmen der Batterie verwendet werden. Grundsätzlich steht bei den genannten Fahrzeugtypen keine Motorwärme zum Heizen einer Fahrgastzelle zur Verfügung.

Der derzeit am häufigsten in Hybridfahrzeugen verwendete Energiespeicher ist eine Nickel-Metallhydrid-Batterie (NiNH-Batterie). Ferner ist das Vorsehen von Natrium-Nickel-Chlorid-Batterien (NaNiCI-Batterien) im Bereich von sog. smart ed bekannt. Diese Batterien weisen eine hohe Energiedichte von 90 bis 140 Wh/kg auf bei allerdings hoher Betriebstemperatur. Daher ist zur Aufrechterhaltung der Betriebsbereitschaft dieser Batterien im ruhenden Betrieb des Fahrzeugs eine Beheizung erforderlich. Lithium-Ionen-Batterien weisen derzeit die höchste Energiedichte aller verfügbaren wieder aufladbaren Energiespeicher auf. Gegenüber herkömmlichen Nickel-Metallhydrid-Batterien weisen die Lithium-Ionen-Hochvoltbatterien eine höhere Energiedichte und einen besseren elektrischen Wirkungsgrad bei zugleich kompakten Abmessungen und einem geringen Gewicht auf. Die spezifische Energiedichte kann hier beispielsweise 120 bis 150 Wh/kg betragen. Ein Kühlen und Beheizen dieser Batterien ist daher zur Aufrechterhaltung der Betriebsbereitschaft besonders wichtig.
Mit den bekannten vorstehend beschriebenen Fahrzeugklimaanlagen bzw. der Vorrichtung zur Kühlung einer Traktionsbatterie ist es nicht möglich, die Betriebsbereitschaft von insbesondere Batterien mit einer hohen Energiedichte zu gewährleisten, da es mit keinem der Systeme möglich ist, solche Batterien sowohl zu kühlen als auch zu beheizen und zugleich auch noch den Fahrzeuginnenraum zu temperieren, wobei alle Funktionen auch unabhängig voneinander verfügbar sind.
Der vorliegenden Erfindung liegt daher die Aufgabe zugrunde, ein Klimatisierungssystem sowie ein Verfahren zum Temperieren von Komponenten eines Fahrzeugs vorzusehen, bei dem ein jeweils im Betrieb gewünschtes bzw. erforderliches Temperieren einzelner Komponenten des Fahrzeugs, wie Batterien, Brennstoffzellen, Leistungselektronik, DC/DC-Wandler beispielsweise für Brennstoffzellen, Fluidsystemen etc. sowie eines Fahrzeuginnenraumes unabhängig voneinander durch Vorsehen eines einzigen Systems möglich ist.
Die Aufgabe wird für ein Klimatisierungssystem nach dem Oberbegriff des Anspruchs 1 dadurch gelöst, dass der Temperierkreislauf zwei Kühlkreisläufe umfasst zum Betreiben von Komponenten eines Fahrzeugs auf unterschiedlichen Temperaturniveaus, und wobei eine Parallelschaltung zweier Verdampfer des zumindest einen Kältemittelkreises vorgesehen ist. Für ein Verfahren nach dem Oberbegriff des Anspruchs 6 wird die Aufgabe dadurch gelöst, dass der Temperierkreislauf zwei Kühlkreisläufe umfasst zum Betreiben von Komponenten eines Fahrzeugs auf unterschiedlichen Temperaturniveaus, wobei Wärme aus dem Temperierkreislauf auf der Niederdruckseite des Kältemittelkreises in diesen aufgenommen wird und Wärme an den Temperierkreislauf auf der Hochdruckseite des Kältemittelkreises von diesem abgegeben wird. Weiterbildungen der Erfindung sind in den abhängigen Ansprüchen definiert.
Dadurch wird ein Klimatisierungssystem, insbesondere für ein Fahrzeug, geschaffen, bei dem zumindest ein Kältemittelkreis und zumindest ein Temperierkreislauf so miteinander gekoppelt sind, dass sowohl ein Heizen als auch ein Kühlen von Fahrzeugkomponenten, wie Batterien, Brennstoffzellen, Leistungselektronik, Fluidsystemen etc., und einem Fahrzeuginnenraum bedarfsgerecht mit ein- und demselben System möglich ist. Über den zwischen den Kältemittelkreis und die zu temperierenden Komponenten geschalteten Wärmeträgerkreislauf in Form des Temperierkreislaufs erfolgt die gesamte Temperierung, also Erwärmung und Kühlung, der Fahrzeugkomponenten. Komponenten, die mittels des Klimatisierungssystems einzeln oder in beliebiger Kombination miteinander temperiert werden können, sind neben Batterien sowie einem Verbrennungsmotor noch beispielsweise Elektromotoren, Wandler, die Leistungselektronik des Fahrzeugs, elektrisch betriebene Nebenaggregate sowie Brennstoffzellen. Bei der Kombination zumindest zweier Komponenten miteinander kann eine Reihen- oder Parallelschaltung der Komponenten vorgesehen werden. Auch kann ein beliebiges Fluidsystem mittels des Klimatisierungssystems temperiert werden.
Es ist mit dem Klimatisierungssystem gemäß der vorliegenden Erfindung somit im Unterschied zum Stand der Technik der EP 0 991 536 B1 nicht lediglich eine Wärmezufuhr zu dem Antriebsaggregat möglich, auch wird nicht lediglich eine Klimaanlage mit einer Umschaltmöglichkeit vom Kühl- in den Heizbetrieb vorgesehen, wie in der DE 102 07 128 A1 beschrieben, sondern ein geschicktes zumindest zweifaches Ineinandergreifen von Kältemittelkreis und Temperierkreislauf, so dass hierüber eine Wärmezufuhr und eine Wärmeabgabe zu und von dem Temperierkreislauf von und an den Kältemittelkreis ermöglicht wird. Die Fahrzeugkomponenten können damit sowohl gekühlt als auch beheizt werden, wechselnd während des Betriebs, um eine optimale Anpassung an die jeweiligen äußeren Erfordernisse zu ermöglichen und die Betriebsbereitschaft der Fahrzeugkomponenten sicherzustellen. Die Fahrzeugkomponenten können dadurch unabhängig von äußeren Witterungsbedingungen auf einer optimalen Temperatur gehalten werden. Zugleich ist eine optimale Klimatisierung des Fahrzeuginnenraums möglich.

Um eine besonders einfache Anpassung an den jeweils erforderlichen Betriebszustand der Fahrzeugkomponenten und des Fahrzeuginnenraums vornehmen zu können, ist vorteilhaft zumindest eine Einrichtung zum Zu- und Abschalten zumindest einer Komponente und/oder eines Teilkreislaufs oder Kreislaufs des Klimatisierungssystems vorgesehen, insbesondere zumindest ein Überbrückungsventil und/oder Mehrwegeventil und/oder eine Bypassleitung. Die einzelnen Elemente oder Komponenten des Kältemittelkreises, auf die von dem Temperierkreislauf zum Wärmeaustausch zugegriffen werden kann, ebenso einzelne Komponenten der beiden Kreisläufe selbst, können somit zu- und abgeschaltet bzw. überbrückt werden, je nach dem jeweils gewünschten Betriebszustand eines Beheizens und/oder Kühlens der Fahrzeugkomponenten und.des Fahrzeuginnenraums.

Vorteilhaft ist die Einrichtung zur Wärmeaufnahme von dem Temperierkreislauf ein niederdruckseitiger Wärmeübertrager, insbesondere ein Verdampfer, und/oder die Einrichtung zur Wärmeabgabe an den Temperierkreislauf ein hochdruckseitiger Wärmeübertrager des zumindest einen Kältemittelkreises, insbesondere ein Enthitzer oder Kondensator. Kältemittelkreis, der beispielsweise Teil einer Fahrzeugklimaanlage ist, die im sog. Airconditioning- oder Kälteanlagen- und Wärmepumpen-Modus laufen kann, und Temperierkreislauf können so ineinander liegen, dass vorteilhaft über einen Verdampfer eine Wärmeabgabe aus dem Temperierkreislauf an den Kältemittelkreis möglich ist. Der Temperierkreislauf kann ferner einen Kühler, der mit der Umgebungsluft in Verbindung steht, sowie einen Heizungswärmetauscher, der mit dem Fahrzeuginnenraum in Verbindung steht, umfassen. Es kann eine Einheit aus dem Heizungswärmetauscher des Temperierkreislaufs und eines Verdampfers des Kältemittelkreises vorgesehen sein. Hierdurch ist sowohl ein Beheizen als auch ein Kühlen des Fahrzeuginnenraums möglich. Der Kältemittelkreis umfasst vorteilhaft weiter zwei Kältemittelkühler oder -enthitzer, wobei der erste Kältemittelkühler oder -enthitzer weiter vorteilhaft in Strömungsrichtung hinter einem Verdichter angeordnet ist, so dass er hochdruckseitig zur Wärmeübertragung an den Temperierkreislauf dienen kann. Der zweite Kältemittelkühler kann als Verdampfer (im Wärmepumpen-Modus) oder als Kondensator bzw. Verflüssiger bzw. Kältemittelenthitzer wirken. Er ist in Strömungsrichtung hinter dem ersten Kältemittelkühler und vor dem mit dem Temperierkreislauf in Verbindung stehenden ersten Verdampfer bzw. einem zwischen diesem und dem zweiten Kältemittelkühler angeordneten Expansionsventil angeordnet.

Weiter vorteilhaft kann eine Einheit aus dem Kühler des Temperierkreislaufs und des zweiten Kältemittelkühlers vorgesehen sein, wobei diese Einheit durch die Umgebungsluft temperiert, also gekühlt oder auch, z.B. bezüglich der Wärmepumpe, beheizt, werden kann.

Weiter vorteilhaft kann ein innerer Wärmetauscher vorgesehen sein, der in den Kältemittelkreis integriert ist. Dieser ist in Strömungsrichtung hinter dem zweiten Kältemittelkühler und hinter einem zweiten Verdampfer angeordnet, so dass ein innerer Wärmeaustausch zwischen dem hin- und dem zurückströmenden Kältemittel bzw. zwischen der Hochdruckseite und der Niederdruckseite möglich ist. Die beiden Verdampfer können in Reihe geschaltet oder parallel betreibbar sein, wobei zumeist die letztere Variante bevorzugt wird. Um Anwendungen vorsehen zu können, bei denen der innere Wärmetauscher überbrückt wird, wie im Wärmepumpen-Modus, ist vorteilhaft ein Überbrückungs- bzw. Bypassventil in Strömungsrichtung hinter dem zweiten Kältemittelkühler angeordnet. Bei Überbrücken des inneren Wärmetauschers kann Kältemittel von dem zweiten Kältemittelkühler direkt zu dem Verdichter zurück geleitet werden. Eine Wärmeaufnahme erfolgt am zweiten Kältemittelkühler und eine Wärmeabgabe am ersten Kältemittelkühler. Hinter dem ersten Kältemittelkühler wird das Kältemittel expandiert und der zweite Kältemittelkühler ist dann auf der Niederdruckseite angeordnet. Mit einem solchen Aufbau ist ein Beheizen der Fahrzeugkomponenten und des Fahrzeuginnenraums möglich.

Ferner ist vorteilhaft ein Überbrückungsventil und/oder eine Bypassleitung zur Überbrückung des Expansionsventils in Strömungsrichtung hinter dem ersten Kältemittelkühler vorgesehen. Insbesondere bei einem Kühlen von Komponenten des Fahrzeugs und gleichzeitigem Beheizen eines Fahrzeuginnenraumes kann Kältemittel bei Überbrücken des Expansionsventils über das Überbrückungsventil von dem ersten Kältemittelkühler direkt zu dem zweiten Kältemittelkühler unter Hochdruck strömen. Der zweite Kältemittelkühler wirkt dann als Kondensator und bewirkt eine Wärmeabgabe und Verflüssigung des Kältemittels. Für diesen Betriebszustand des Kühlens der Fahrzeugkomponente und gleichzeitigen Beheizens des Fahrzeuginnenraumes erfolgt eine Druckabnahme vorteilhaft erst hinter dem zweiten Kältemittelkühler vor dem ersten Verdampfer über das dort vorteilhaft vorgesehene zweite Expansionsventil.

Es kann in dem Kältemittelkreis eine Parallelschaltung zweier Verdampfer vorgesehen sein. Dies erweist sich insbesondere als vorteilhaft, um beide Kältemittelkreise unabhängig voneinander betreiben zu können. Hierbei sind vorteilhaft zwei Expansionsventile zwischen dem zweiten Kältemittelkühler und dem jeweiligen Verdampfer angeordnet, wobei sich der Kältemittelstrom hinter dem zweiten Kältemittelkühler entsprechend in zwei Massenströme teilen kann, in Abhängigkeit davon, wie das Klimatisierungssystem betrieben wird. Soll hier eine kostengünstigere Lösung gewählt werden, kann eine Reihenschaltung zweier Verdampfer des zumindest einen Kältemittelkreises vorgesehen sein. Bei letzterer Lösung können die Teilung des Massenstroms und das Expansionsventil vor dem zweiten Verdampfer entfallen. Das Vorsehen zweier Expansionsventile ermöglicht es, auf unterschiedliche Drücke auf der Niederdruckseite zu expandieren.

Vorteilhaft ist lediglich ein Temperierkreislauf zum Kühlen und Beheizen der Komponenten des Fahrzeugs, wie beispielsweise der Batterie, Brennstoffzellen etc. vorgesehen. Überbrückungsventile und Bypassleitungen dienen dabei zum selektiven Zu- und Abschalten von einzelnen Elementen des Temperierkreislaufs und des Kältemittelkreises sowie zum selektiven Zu- und Abschalten von zu temperierenden Komponenten.

Weiter vorteilhaft kann der Temperierkreislauf zum Temperieren von Fahrzeugkomponenten einen Kühlkreislauf und einen Heizkreislauf umfassen, die dann jeweils einzeln auf die Einrichtung zur Wärmeaufnahme von dem Temperierkreislauf und die Einrichtung zur Wärmeabgabe an den Temperierkreislauf zugreifen.

Ferner kann der Temperierkreislauf zwei Kühlkreisläufe umfassen zum Betreiben von Komponenten eines Fahrzeugs, insbesondere Hybridfahrzeugs, auf unterschiedlichen Temperaturniveaus. Solche unterschiedlichen Temperaturniveaus werden vor allem bei einem Hybridfahrzeug abgefragt, da ein Verbrennungsmotor mit einem anderen Temperaturniveau arbeitet, nämlich üblicherweise einer Kühlung auf etwa 90 °C, als die anderen Fahrzeugkomponenten, wie Batterie, Brennstoffzelle, Leistungselektronik, Fluidsysteme etc..

Ebenfalls ist es möglich, einzelne Komponenten des Klimatisierungssystems, Klima- bzw. Kälteanlage oder Wärmepumpe in zwei oder ggf. auch mehr Kreisläufe aufzuteilen.

Als weiter vorteilhaft erweist es sich, die eine oder mehreren Pumpen und einen oder mehreren Verdichter der Kreisläufe und Teilkreisläufe elektrisch betreibbar oder angetrieben vorzusehen, da diese dadurch mit geringer Energiezufuhr sehr gut betrieben werden können und sich insbesondere für Elektrofahrzeuge besonders eignen.

Ein in dem Kältemittelkreis verwendbares Kältemittel ist vorteilhaft ausgewählt aus CO₂ bzw. R744, einem Hydrofluoroolefin, wie HFO-1234yf, einem Tetrafluorethan, wie 1,1,1,2- Tetrafluorethan bzw. R134a. CO₂ ist dabei ein Hochdruckkältemittel, das im überkritischen Bereich arbeitet, wohingegen HFO-1234yf und R134 Kältemittel sind, die im unterkritischen Bereich arbeiten.

Für den Temperierkreislauf eignet sich beispielsweise ein Kühlwasser mit zugesetztem Frostschutzmittel.

Im Prinzip könnte sogar eine direkte Kühlung von Komponenten, vor allem einer Batterie, von dem Kältemittelkreis unter Umgehen des Wärmeträger- bzw. Temperierkreislaufes erfolgen. Hierbei sind dann jedoch zusätzliche Maßnahmen zur Anpassung bzw. zum Ausgleich des unterschiedlichen in dem Kältemittelkreis und den Komponenten herrschenden Drucks zu ergreifen.

Zur näheren Erläuterung der Erfindung werden im Folgenden Ausführungsbeispiele von dieser näher anhand der Zeichnungen beschrieben. Diese zeigen in:
- Figur 1: eine Gesamtansicht einer ersten Ausführungsform eines erfindungsgemäßen Klimatisierungssystems,
- Figur 2: die Gesamtansicht des Klimatisierungssystems gemäß Figur 1 für den Betriebszustand des Beheizens einer Batterie sowie des Beheizens eines Fahrzeuginnenraums,
- Figur 3: die Gesamtansicht des Klimatisierungssystems gemäß Figur 1 für den Betriebszustand des Kühlens der Batterie und des Beheizens des Fahrzeuginnenraums,
- Figur 4: die Gesamtansicht des Klimatisierungssystems gemäß Figur 1 für den Betriebszustand des Kühlens der Batterie und des Beheizens des Fahrzeuginnenraums,
- Figur 5: die Gesamtansicht des Klimatisierungssystems gemäß Figur 1 für den Betriebszustand des Kühlens der Batterie sowie des Kühlens des Fahrzeuginnenraums,
- Figur 6: eine Gesamtansicht einer zweiten Ausführungsform eines erfindungsgemäßen Klimatisierungssystems mit zwei getrennten Heiz- und Kühlkreisläufen,
- Figur 7: eine Gesamtansicht einer dritten Ausführungsform eines erfindungsgemäßen Klimatisierungssystems für ein Hybridfahrzeug mit zwei Kühlkreisläufen und einem Heizkreislauf, und
- Figur 8: eine Gesamtansicht einer weiteren Ausführungsform eines erfindungsgemäßen Klimatisierungssystems für ein Hybridfahrzeug mit einer Reihenschaltung von zwei Verdampfern des Kältemittelkreises.

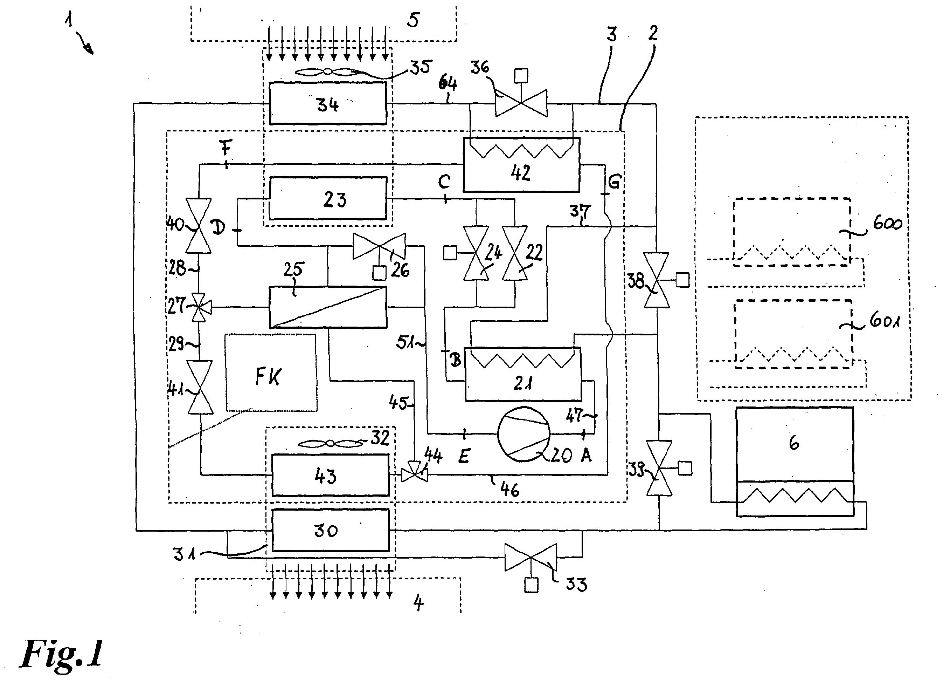

Figur 1 zeigt eine Prinzipskizze eines Klimatisierungssystems 1 mit einem Kältemittelkreis 2 und einem Temperierkreislauf 3. Der Kältemittelkreis kann beispielsweise Teil einer Fahrzeugklimaanlage FK, die im Airconditioning- und Wärmepumpen-Modus betreibbar ist, sein. Der Kältemittelkreis 2 umfasst einen Verdichter 20, einen ersten Kältemittelkühler 21, ein erstes Expansionsventil 22, einen zweiten Kältemittelkühler 23, der je nach Modus als Kondensator oder Verdampfer (im Wärmepumpen-Modus) betreibbar ist. Parallel zu dem Expansionsventil 22 ist eine Bypassleitung mit einem Überbrückungsventil 24 angeordnet. Der Kältemittelkreis 2 umfasst in Strömungsrichtung des Kältemittels hinter dem zweiten Kältemittelkühler 23 ferner einen inneren Wärmetauscher 25. Dieser ist lediglich optional vorgesehen und kann bei Vorsehen, wie in Figur 1 gezeigt, über ein Überbrückungsventil 26 überbrückt werden, wobei dann ein Rückfluss von Kältemittel von dem zweiten Kältemittelkühler 23 zu dem Verdichter 20 über eine Leitung 51 möglich ist. Der zweite Kältemittelkühler 23 wird im Wärmepumpen-Modus als Verdampfer betrieben, wobei sich das Kältemittel erwärmt.

Hinter dem inneren Wärmetauscher 25 verzweigt sich das Kältemittelleitungssystem über ein Dreiwegeventil 27 in zwei Leitungen. Anstelle des Dreiwegeventils kann auch eine andere Ventilart oder eine andere Leitungsführung hier vorgesehen werden. Beide Leitungen 28, 29 umfassen jeweils ein Expansionsventil. Diese beiden Expansionsventile 40, 41 führen zu zwei Verdampfern, dem ersten Verdampfer 42, der mit dem Temperierkreislauf 3 in Verbindung steht, und dem zweiten Verdampfer 43, der zum Temperieren des Fahrzeuginnenraums 4 verwendet werden kann. Der zweite Verdampfer 43 bildet mit einem Heizungswärmetauscher 30 des Temperierkreislaufs 3 zusammen eine Heiz-/ Kühleinheit 31 zum Temperieren des Fahrzeuginnenraums 4. Die Heiz-/ Kühleinheit 31 umfasst ferner einen Ventilator bzw. ein Gebläse 32.

Zum Rückführen des hinter dem Verdampfer 43 austretenden Kältemittels zu dem Verdichter 20 ist dort ein weiteres Dreiwegeventil 44 vorgesehen. Die von diesem abgehende Leitung 45 führt zum inneren Wärmetauscher 25. Die andere von dem Dreiwegeventil 44 abgehende Leitung 46 ist mit dem ersten Verdampfer 42 verbunden. Hierüber ist somit der Kältekreis geschlossen.

Der Temperierkreislauf 3 umfasst neben dem bereits genannten Heizungswärmetauscher 30 ein Überbrückungsventil 33 für diesen. Ferner umfasst der Temperierkreislauf 3 einen Kühler 34 mit Ventilator bzw. Gebläse 35, der mit der Umgebung 5 bzw. Umgebungsluft in Verbindung steht. Der Kühler 34 und der zweite Kältemittelkühler 23 können ebenfalls als eine Einheit zur Wärmeaufnahme und -abgabe aus bzw. von der Umgebung 5 betrieben werden.

Der erste Verdampfer 42 des Kältemittelkreises 2, über den ein Wärmeaustausch mit dem Temperierkreislauf 3 erfolgen kann, kann überbrückt werden über ein von der Kühlmittelströmung her hinter dem Kühler 34 liegendes Überbrückungsventil 36. In den Abzweigen der von dem Kühler 34 zu dem Überbrückungsventil 36 bzw. zu dem Verdampfer 42 gehenden Leitung 64 kann ein in Figur 1 nicht dargestelltes Dreiwegeventil oder eine andere Art eines Ventils vorgesehen sein.

Auch über den ersten Kältemittelkühler 21 kann ein Wärmeaustausch des Kältemittelkreises mit dem Temperierkreislauf erfolgen. Hier ist eine entsprechende Leitung 37 von dem Temperierkreislauf zu dem ersten Kältemittelkühler 21 und wieder zurück zu dem Temperierkreislauf vorgesehen. Ebenso ist jedoch auch eine Überbrückung des ersten Kältemittelkühlers seitens des Temperierkreislaufs über ein Überbrückungsventil 38 möglich. Somit muss nicht in jedem Falle ein Wärmeaustausch mit dem ersten Kältemittelkühler 21 erfolgen. Nachfolgend werden noch verschiedene Betriebszustände hierzu näher erläutert.

Die jeweilige eine Wärmeübertragung vornehmende Komponente des Klimatisierungssystems kann im Gleichstrom, Gegenstrom oder Kreuzstrom betrieben werden. Auch sind je nach Wärmeübertrager oder -tauscher noch weitere Betriebsarten möglich.

In Figur 1 ist ferner beispielhaft eine Batterie 6 als zu temperierender Komponente eines Fahrzeugs gezeigt, die in den Temperierkreislauf 3 eingebunden ist. Alternativ oder zusätzlich können über das Klimatisierungssystem 1 andere Komponenten 600, 601 eines Fahrzeugs temperiert werden, wie beispielsweise die Leistungselektronik des Fahrzeugs, Fluidsysteme, Brennstoffzellen etc. Diese einzelnen Komponenten können parallel oder in Reihe zugeschaltet werden, also in das Klimatisierungssystem eingebunden werden. Auch weitere Wärmetauscher können hier zugeschaltet werden. Diese können beispielsweise ein weiteres Fluid zur Kälte- und/oder Wärmeübertragung temperieren. Um ein solches Zuschalten zu und Herausnehmen aus dem Klimatisierungssystem zu ermöglichen, sind hier jeweils Überbrückungsventile vorgesehen. Beispielhaft ist ein Überbrückungsventil 39 zum Überbrücken der Batterie 6 in Strömungsrichtung des Kühlmittels hinter dem Überbrückungsventil 38 angeordnet. Das Kühlmittel kann somit entweder an der Batterie 6 vorbei strömen oder zur Temperierung von dieser verwendet werden. Anstelle von Überbrückungsventilen können auch andere Ventilarten hier verwendet werden, wie z.B. Wegeventile.

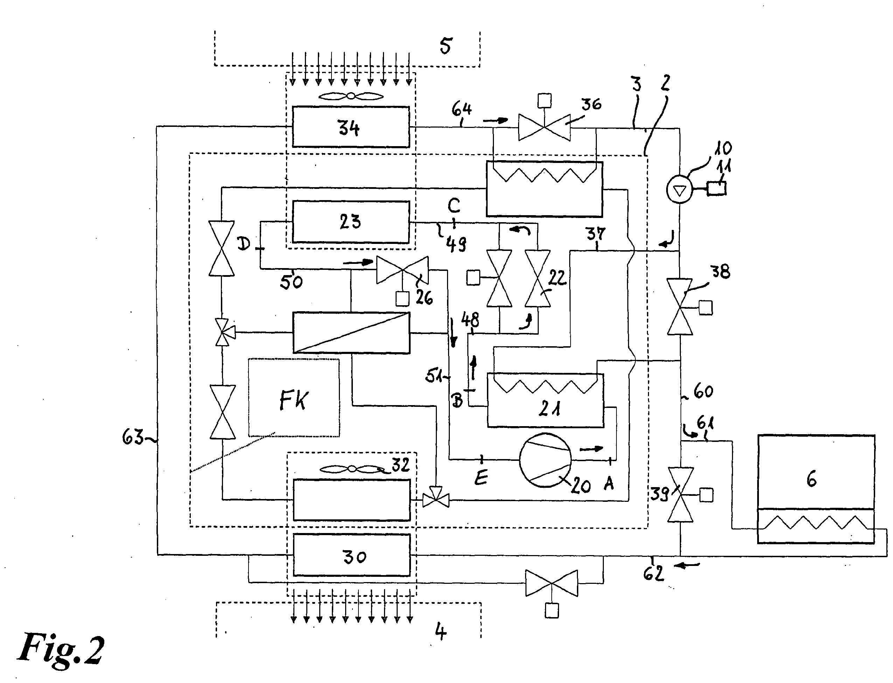

Die meisten Batterien, insbesondere von Elektrofahrzeugen oder Brennstoffzellenfahrzeugen benötigen für einen sicheren Betrieb Temperaturen von 15 - 35 °C. Liegen diese aufgrund der Umgebungstemperaturen, die beispielsweise zwischen -20 °C und +40 °C schwanken können, nicht vor, ist eine Temperierung der Batterie bzw. der anderen Komponenten des Fahrzeugs, wie sie vorstehend genannt sind, erforderlich. Zugleich ist, je nach den vorliegenden Umgebungstemperaturen, auch eine Klimatisierung des Fahrzeuginnenraumes erwünscht mit Temperaturen, die im Allgemeinen zwischen 16 °C und 25 °C liegen. Somit können diverse Betriebszustände von Batterie bzw. anderen Fahrzeugkomponenten und -kreisläufen und dem Fahrzeuginnenraum abgefragt werden, die nachfolgend anhand der Figuren 2 - 8 näher erläutert werden sollen. Mögliche Betriebszustände können das Kühlen von Batterie bzw. Komponenten und Kreisläufen sowie des Fahrzeuginnenraums, das Kühlen lediglich des Fahrzeuginnenraumes, das Kühlen lediglich der Batterie bzw. der anderen Komponenten und Kreisläufe des Fahrzeugs, das Kühlen der Batterie bzw. anderen Komponenten und Kreisläufe des Fahrzeugs in Verbindung mit dem Heizen des Fahrzeuginnenraumes, das Beheizen sowohl der Batterie bzw. Komponenten und Kreisläufe des Fahrzeugs also auch des Fahrzeuginnenraumes, das Beheizen lediglich des Fahrzeuginnenraumes und ferner das Beheizen lediglich der Batterie bzw. anderen Komponenten und Kreisläufe des Fahrzeugs sein.

Figur 2 zeigt den Betriebszustand des Beheizens der Batterie 6 als Beispiel für eine oder mehrere der temperierbaren Komponenten sowie des Fahrzeugsinnenraums 4, was das Heizen des Fahrzeuginnenraums sowie des Temperierkreislaufs umfasst. Nachfolgend wird die Batterie stellvertretend für eine oder mehrere der zu temperierenden Komponenten des Fahrzeugs genannt. Das im Kältemittelkreis 2 fließende Kältemittel wird hierbei über den Verdichter 20 verdichtet, so dass das Kältemittel an dem Punkt A hinter dem Verdichter 20 mit hohem Druck und in überhitztem Zustand gasförmig vorliegt. In diesem Zustand gelangt das Kältemittel in den Kältemittelkühler 21. In diesem ist eine Wärmeabgabe über die Leitung 37 an den Temperierkreislauf 3 möglich. Das Überbrückungsventil 38 ist somit geschlossen, so dass die in dem als Wärmetauscher ausgebildeten Kältemittelkühler 21 abgegebene Wärme über die Leitungen 60, 61 zur Batterie 6 gelangen kann. Hierüber ist somit eine Beheizung der Batterie, ebenso wie weiterer Komponenten des Fahrzeugs möglich.

Eine weitere Wärmeabgabe kann über den Heizungswärmetauscher 30 an den Fahrzeuginnenraum 4 über die von der Batterie zum Heizungswärmetauscher führende Leitung 62 erfolgen. Hier wird also die nicht in der Batterie zur Erwärmung abgenommene Wärme an den Heizungswärmetauscher 30 weiter geleitet. Erwärmt sich die Batterie beim Betrieb, kann auch diese Wärme an das Kühlmittel in der Leitung 62 abgegeben werden und somit zum Heizungswärmetauscher 30 gelangen. Ein Beheizen des Fahrzeuginnenraumes 4 über den Heizungswärmetauscher 30 erfolgt insbesondere unter Beteiligung des Ventilators 32 bzw. eines entsprechenden Gebläses, das erwärmte Luft in den Fahrzeuginnenraum einströmen lässt. Über den Heizungswärmetauscher wird diese Luft erwärmt und über das Gebläse bzw. den Ventilator 32 in den Fahrzeuginnenraum 4 eingeblasen.

Das aufgrund der Wärmeabgabe im Heizungswärmetauscher 30 abgekühlte Kühlmittel gelangt über die Leitung 63 zu dem Kühler 34. Die Umgebungsluft der Umgebung 5 kann hierbei zum Abkühlen des Kühlmittels verwendet werden. Insbesondere erfolgt ein Beheizen von Batterie und Fahrzeuginnenraum immer dann, wenn der Istwert der Temperatur unter dem vorgegebenen Sollwert der Temperatur liegt.

Das abgekühlte Kühlmittel gelangt von dem Kühler 34 über die Leitung 64 und das geschlossene Überbrückungsventil 36 direkt wieder zu dem ersten Kältemittelkühler 21, um in diesem wiederum erwärmt zu werden. Zum Befördern des Kühlmittels durch den Temperierkreislauf ist in dem gezeigten Beispiel eine Pumpe 10 vorgesehen, die von einem Elektromotor angetrieben wird. Möglich ist auch das Vorsehen eines selbständig erfolgenden Umlaufs, z.B. bei verdampfendem Kühlmittel.

Grundsätzlich wird über den Kältemittelkühler 21 Wärme an das Temperiersystem übertragen. Dies kann einerseits beim Betrieb des Klimatisierungssystems als Kälteanlage erfolgen und andererseits beim Betrieb als Wärmepumpe, was nachfolgend beschrieben wird.

Aufgrund der Wärmeabgabe in dem Kältemittelkühler 21 liegt das Kältemittel am Punkt B in der von dem Kältemittelkühler 21 zum Expansionsventil 22 geführten Leitung 48 vor dem Expansionsventil 22 unter hohem Druck, jedoch mit geringerer Temperatur als am Punkt A vor. Über das Expansionsventil 22 erfolgt eine Druckabnahme, so dass das Kältemittel am Punkt C hinter dem Expansionsventil unter einem Niederdruck vorliegt. In der Leitung 49 liegt das Kältemittel dann als Nassdampf vor und gelangt als solcher in den zweiten Kältemittelkühler 23. Der Kältemittelkühler 23 wirkt hier als Verdampfer, so dass eine Wärmezufuhr erfolgt. Die für die Verdampfung erforderliche Wärme wird insbesondere der Umgebungsluft entzogen. Der zweite Kältemittelkühler 23 und der Kühler 34 sind insofern als Einheit zusammen gefasst, da beide einen Wärmeaustausch mit der Umgebungsluft 5 vornehmen können.

In der Leitung 50 bzw. am Punkt D hinter dem zweiten Kältemittelkühler 23 liegt das Kältemittel zwar unter Niederdruck, jedoch mit gegenüber Punkt C erhöhter Temperatur aufgrund der Wärmeaufnahme vor. Das Kältemittel wird über das Überbrückungsventil 26, das zu diesem Zweck geschlossen ist, direkt zu dem Verdichter 20 zurück geleitet über die Leitung 51. Vor dem Verdichter am Punkt E liegt das Kältemittel somit unter Niederdruck und mit etwa der gleichen Temperatur wie am Punkt D vor, so dass nachfolgend über den Verdichter 20 das Erhitzen und Setzen des Kältemittels unter Hochdruck wiederum erfolgen kann, wie vorstehend beschrieben.

Der erste Kältemittelkühler 21 kann in unterschiedlicher Weise ausgeführt sein, entsprechend den verschiedensten Wärmetauscherprinzipien. Insbesondere kann er als Gegenstrom-, Gleichstrom- oder auch Kreuzstrom-Wärmetauscher ausgebildet sein. Der zweite Kältemittelkühler 23 kann, wie vorstehend bereits erwähnt, sowohl als Verflüssiger bzw. Kondensator als auch als Verdampfer betrieben werden, je nachdem, welchen Zustand (Hochdruck oder Niederdruck) das Kältemittel beim Eintritt in den Kältemittelkühler 23 aufweist und in welcher Form es von dem Kältemittelkühler 23 abgegeben werden soll.

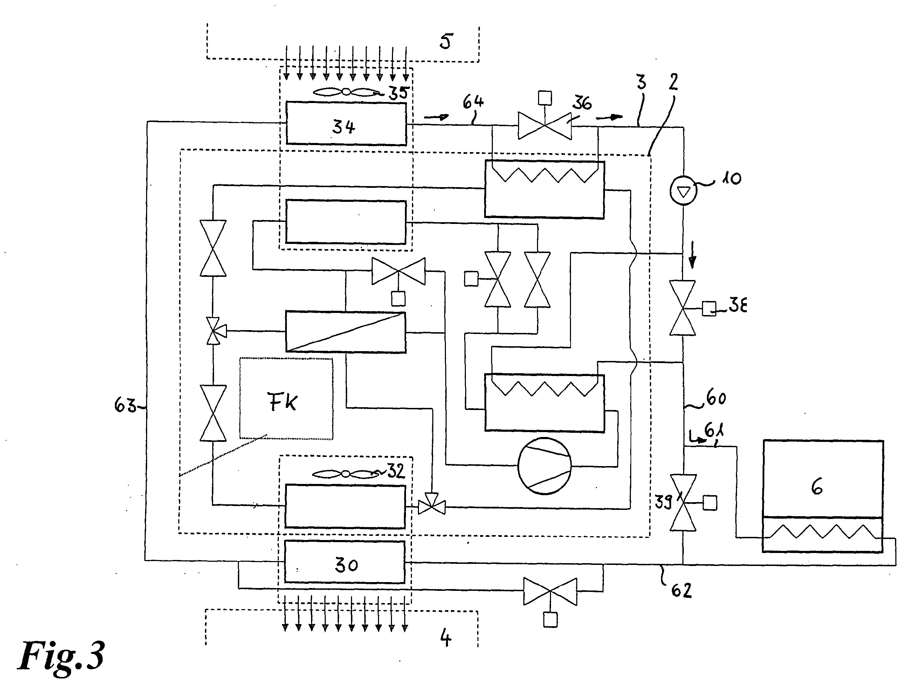

Figur 3 zeigt einen weiteren Betriebszustand, nämlich den des Kühlens der Komponenten des Fahrzeugs, hier veranschaulicht am Beispiel der Batterie 6, sowie des Beheizens des Fahrzeuginnenraumes 4. In der dargestellten Ausführungsform erfolgt dieser Betriebszustand ohne Beteiligung des Kältemittelkreises 2. Hier dient lediglich das Kühlmittel zum Kühlen der Batterie und Beheizen des Fahrzeuginnenraumes. Das Kühlmittel wird über den Kühler 34 durch die Umgebungsluft 5 gekühlt und gelangt über die Leitung 64, das Überbrückungsventil 36 sowie das Überbrückungsventil 38, die beide geschlossen sind, die Leitung 60 sowie die Leitung 61 zur Batterie 6. Hier dient es zum Kühlen der Batterie, nimmt jedoch nach dem Wärmetauscherprinzip die überschüssige Wärme der Batterie auf, so dass es mit erhöhter Temperatur durch die Leitung 62 zum Heizungswärmetauscher strömt. Über diesen kann die überschüssige Wärme durch Erwärmen der im Fahrzeuginnenraum befindlichen Luft zum Beheizen desselben verwendet werden. Über den Heizungswärmetauscher 30 wird somit Wärme in den Fahrzeuginnenraum 4 abgegeben. In der Leitung 63 wird das Kühlmittel somit mit verminderter Temperatur zum Kühler 34 zurückgeführt, bei dem der Kreislauf erneut beginnen kann.

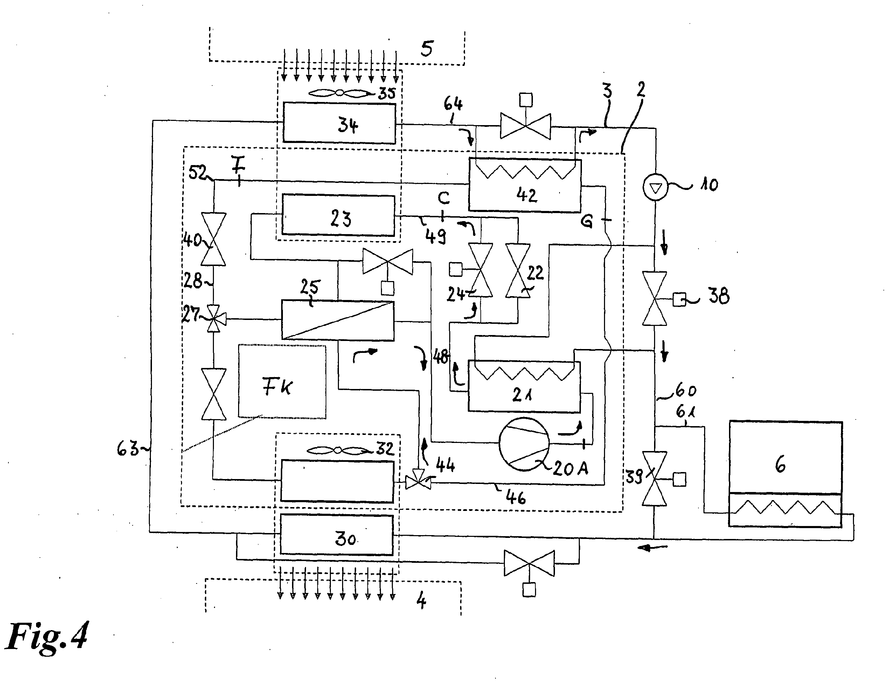

Eine alternative Variante zum Kühlen beispielhaft der Batterie 6 und Beheizen des Fahrzeuginnenraumes 4 ist in dem Verschaltungsplan gemäß Figur 4 gezeigt. Bei dieser Ausführungsform wird bei der Wärmeübertragung der Kältemittelkreis 2 beteiligt. Über den Verdichter bzw. Gasverdichter 20 wird das Kältemittelgas komprimiert, so dass es, wie vorstehend zu Figur 2 erläutert, am Punkt A hinter dem Verdichter 20 gasförmig unter hohem Druck und überhitzt vorliegt. In diesem Zustand gelangt das Kältemittel in den Kältemittelkühler 21, in dem jedoch im vorliegenden Falle keine Wärmeabgabe an den Temperierkreislauf 3 erfolgt, da er zwar durch das Kältemittel, nicht jedoch durch das Kühlmittel durchströmt wird. Vielmehr gelangt das Kältemittel über die Leitung 48, weiterhin unter hohem Druck, zu dem nun geschlossenen Überbrückungsventil 24. Somit wird das Expansionsventil 22 überbrückt. Am Punkt C in der Leitung 49 liegt das Kältemittel immer noch unter hohem Druck vor und gelangt als immer noch überhitztes gasförmiges Medium in den Kältemittelkühler 23. Dieser dient hier als Verflüssiger bzw. Kondensator, wobei Wärme an die Umgebungsluft abgegeben wird. Eine zusätzliche Wärmeabgabe an die Niederdruckseite des Kältemittelkreislaufs kann noch über den inneren Wärmetauscher 25 erfolgen, durch den das Kältemittel nachfolgend strömt. Das noch unter einem hohen Druck stehende Kältemittel gelangt sodann über das Dreiwegeventil 27 und die Leitung 28 zu dem Expansionsventil 40, in dem eine Druckverringerung bei gleich bleibender Temperatur erfolgt. An dem Punkt F hinter dem Expansionsventil 40 in der Leitung 52 liegt das Kältemittel unter Niederdruck vor.

Von dem Expansionsventil 40 gelängt das Kältemittel zu dem Verdampfer 42, in dem eine Wärmeaufnahme bei Niederdruck erfolgt. Die Wärme wird durch das Kühlmittel in dem Temperierkreislauf 3 zur Verfügung gestellt. Zu diesem Zweck wird das Kühlmittel hinter dem Kühler 34 über den Verdampfer 42 geleitet, wobei das Überbrückungsventil 36 geöffnet ist. Das entsprechend hierdurch abgekühlte Kühlmittel kann über die Pumpe 10, das Überbrückungsventil 38, die Leitungen 60 und 61 zu der Batterie gepumpt werden, in der es zu deren Kühlung dient.

Das in dem Verdampfer 42 erwärmte Kältemittel liegt hinter diesem am Punkt G unter niedrigem Druck vor und wird über die Leitung 46 und das Dreiwegeventil 44 zu dem inneren Wärmetauscher 25 und von dort zu dem Verdichter 20 zurückgeführt. In dem inneren Wärmetauscher 25 kann ein Wärmeaustausch mit dem von dem Kältemittelkühler 23 zu dem Expansionsventil 40 strömenden Kältemittel erfolgen. Der innere Wärmetauscher kann grundsätzlich auch weggelassen werden.

Von der Batterie 6 bzw. den anderen zu dieser in Reihe oder parallel geschalteten Komponenten 600, 601 des Fahrzeugs strömt das Kühlmittel zu dem Heizungswärmetauscher 30, um über diesen den Fahrzeuginnenraum 4 zu beheizen. Nachfolgend wird das entsprechend abgekühlte Kühlmittel über die Leitung 63 zu dem Kühler 34 zurückgepumpt.

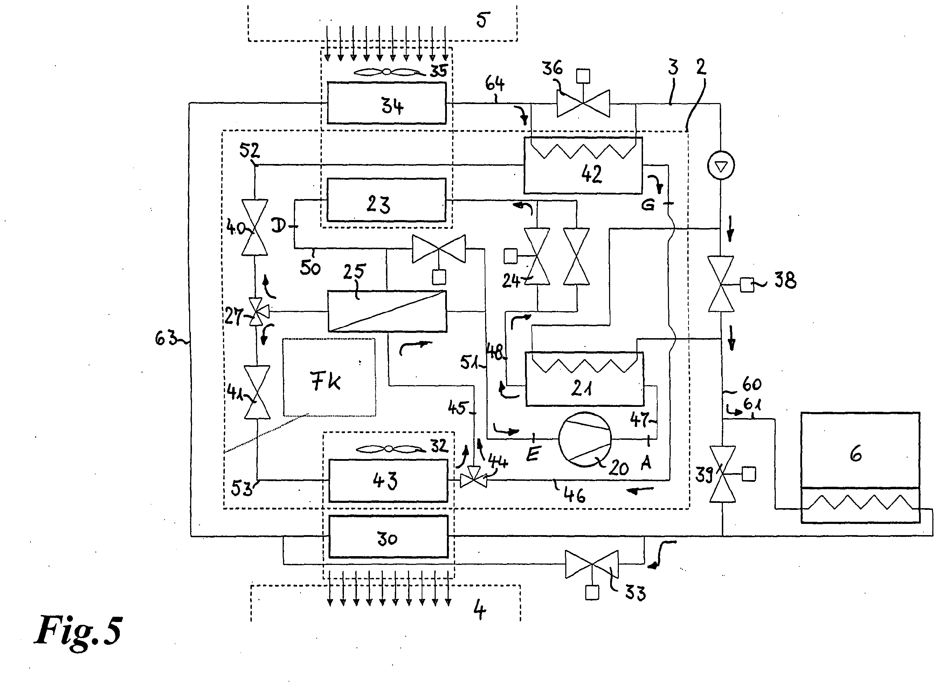

Figur 5 zeigt das Klimatisierungssystem mit den jeweils wirksamen Komponenten bzw. Elementen des Systems für den Betriebszustand des Kühlens der Batterie 6 bzw. von Komponenten oder Fluidsystemen oder Brennstoffzellen etc. des Fahrzeugs sowie des Kühlens des Fahrzeuginnenraumes 4. In dem Kältemittelkreis 2 werden hierbei beide Verdampfer 42, 43 ebenso wie beide Kältemittelkühler 21, 23 und der optional vorgesehene innere Wärmetauscher 25 wirksam. Das Kältemittel wird in dem Verdichter 20 verdichtet und liegt im Punkt A somit unter einem hohen Druck und in stark überhitztem Zustand gasförmig vor. Über die Leitung 47 gelangt das Kältemittel dann in den ersten Kältemittelkühler 21. In diesem erfolgt kein Wärmeaustausch mit dem Temperierkreislauf 3, da das Kühlmittel nicht den Kältemittelkühler 21 durchströmt. Vielmehr gelangt das Kältemittel weiterhin unter Hochdruck über das Überbrückungsventil 24 zu dem zweiten Kältemittelkühler 23. Der Kältemittelkühler 23 wirkt hier als Verflüssiger bzw. Kondensator, wobei das heiße Gas seine Wärme an die Umgebungsluft abgeben kann und kondensiert. Somit liegt das Kältemittel am Punkt D hinter dem Kältemittelkühler 23 zwar noch unter Hochdruck, jedoch mit verminderter Temperatur im weitgehend flüssigen Zustand vor. Über die Leitung 50 wird es dem inneren Wärmetauscher 25 zugeleitet, in dem ein Wärmeaustausch mit dem weiter unten noch genannten rückströmenden Kältemittel erfolgen kann. Hinter dem inneren Wärmtauscher 25 bilden sich zwei Massenströme, die über das Dreiwegeventil 27 sowohl dem Expansionsventil 40 als auch dem Expansionsventil 41 zugeführt werden. In beiden Expansionsventilen wird der hohe Druck auf einen Niederdruck reduziert bei gleichzeitiger Temperaturabnahme des Kältemittels. Über die Leitung 52 wird das Kältemittel dem Verdampfer 42 zugeführt und über die Leitung 53 dem Verdampfer 43. Über den Verdampfer 42 erfolgt eine Temperaturerhöhung durch Wärmeaufnahme aus dem Temperierkreislauf, wobei das Überbrückungsventil 36 im Temperierkreislauf 3 geschlossen ist und das Kühlmittel über den Verdampfer 42 zum Wärmeaustausch geleitet wird. Hierdurch wird das Kühlmittel weiter abgekühlt und gelangt über das offene Überbrückungsventil 38 sowie die Leitungen 60, 61 zur Batterie 6 bzw. den zu kühlenden Komponenten des Fahrzeugs.

Da keine Erwärmung des Fahrzeuginnenraumes 4 erfolgen soll, wird der Heizungswärmetauscher 30 durch Öffnen des Überbrückungsventils 33 überbrückt, so dass das in der Batterie bzw. in den anderen Komponenten des Fahrzeugs erwärmte Kühlmittel direkt dem Kühler 34 wieder zugeführt wird. In diesem erfolgt ein Abkühlen des Kühlmittels unter Zuhilfenahme der Umgebungsluft.

Der über das Dreiwegeventil 27 dem Expansionsventil 41 zugeführte Kältemittelmassenstrom gelangt über die Leitung 53 zum Verdampfer 43, wie bereits erwähnt. Hier verdampft das flüssige Kältemittel bei niedrigem Druck und niedriger Temperatur unter Wärmeaufnahme aus der Fahrzeuginnenraumluft, z.B. im Umluftbetrieb, oder der Außen- bzw. Umgebungsluft, die dem Fahrzeuginnenraum zugeführt wird, so dass der Fahrzeuginnenraum 4 hierüber gekühlt werden kann. Im Prinzip erfolgt somit hier eine Kühlung über die Fahrzeugklimaanlage, wobei das Gebläse bzw. der Ventilator 32 ein- oder ggf. ausgeschaltet sein kann.

Das in dem Verdampfer 43 erwärmte Kältemittel wird über das Dreiwegeventil 44 der Leitung 45 wieder zugeführt und über diese dem optional vorgesehenen inneren Wärmetauscher 25, wobei hier ein Wärmeaustausch mit dem hinströmenden Kältemittel aus dem Kältemittelkühler 23 erfolgen kann. Das dadurch weiter erwärmte und gasförmige Kältemittel wird über die Leitung 51 wiederum dem Verdichter 20 zugeleitet, so dass hier wiederum eine Verdichtung des Kältemittels in dem Verdichter 20 erfolgen kann.

Auch von dem Verdampfer 42 wird das unter Wärmeaufnahme erwärmte Kältemittel, das am Punkt G einen niedrigen Druck aufweist, über die Leitung 46 dem Dreiwegeventil 44 und über dieses ebenfalls über die Leitung 45, den inneren Wärmetauscher 25 und die Leitung 51 wieder dem Verdichter 20 zugeführt, so dass hierüber auch der Kältemittelkreis geschlossen wird.

Als alternative Ausführungsvariante können die beiden Verdampfer 42, 43 auch auf unterschiedlichen Niederdruck-Drucklagen betrieben werden. Hierfür wird dann in zumindest eine der beiden Leitungen 46, 47 eine geeignete Regelungseinrichtung oder zumindest ein Rückschlagventil zum Verhindern des Rückströmens des Kältemittels in einen der Niederdruckkreise eingefügt. Der optional vorgesehene innere Wärmetauscher 25 wird dann von einem mittleren Niederdruck durchströmt.

Somit können sowohl Batterie als auch Fahrzeuginnenraum gekühlt werden durch geeignetes Zuschalten bzw. Überbrücken einzelner Elemente des Kühlkreislaufs sowie des Kältekreises. Sollen jeweils nur die Fahrzeugkomponenten 6, 600, 601 oder der Fahrzeuginnenraum gekühlt oder beheizt werden, wird der jeweilige Teil des Kreislaufs durch Öffnen der Überbrückungsventile 33 bzw. 39 abgeschaltet, also nicht mit Kühlmittel versorgt.

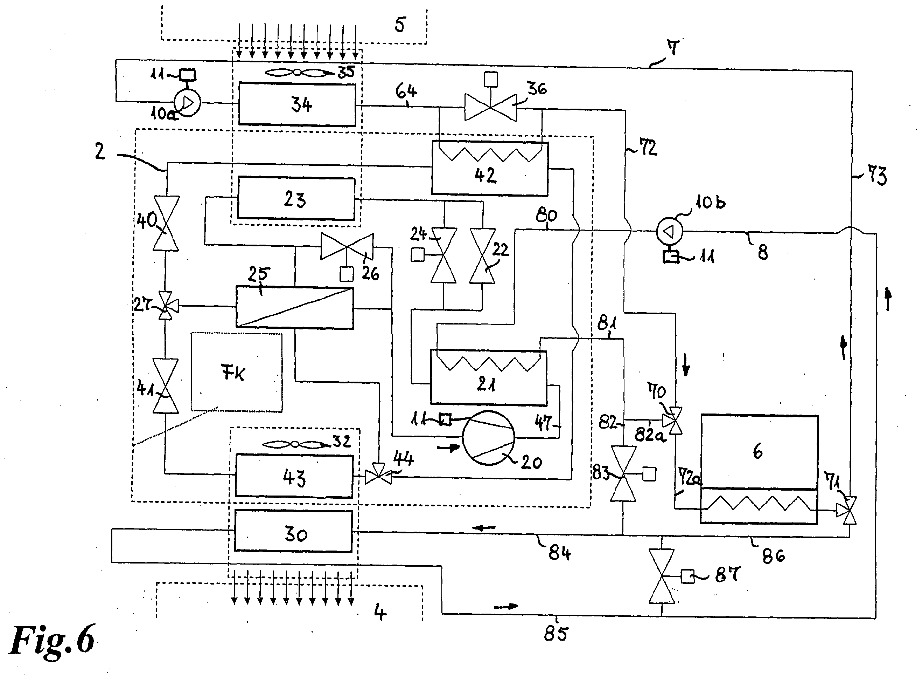

Figur 6 zeigt eine Variante des Klimatisierungssystems 1, bei der der Kältemittelkreis 2, jedoch nicht der eine Temperierkreislauf 3, sondern dieser als Kombination aus getrenntem Kühlkreislauf 7 und Heizkreislauf 8 vorgesehen ist. Die Batterie 6 und/oder weitere oder andere Komponenten eines Fahrzeugs, die zu dieser parallel oder in Reihe geschaltet sein können, wie vorstehend bereits zu der Ausführungsform gemäß Figur 1 erwähnt, ist so angeordnet, dass sowohl ein Einbinden in den Heizkreislauf 8 als auch in den Kühlkreislauf 7 möglich ist. Zu diesem Zweck sind, wie in Figur 6 gezeigt, z.B. zwei Dreiwegeventile 70, 71 vor und hinter der Batterie so angeordnet, dass über diese ein Zuleiten von kühlendem Kühlmittel aus dem Kühlkreislauf 7 ebenso wie erhitztem Kühlmittel aus dem Heizkreislauf 8 möglich ist.

Bei dem Kühlkreislauf 7, der den Kühler 34 sowie die zu dem Verdampfer 42 führende Leitung 64 und das Überbrückungsventil 36 zum Überbrücken des Verdampfers 42 umfasst, führt eine Leitung 72 von dem Verdampfer 42 bzw. dem Überbrückungsventil 36 zu dem Dreiwegeventil 70. Von diesem ist eine Leitung 72 vorgesehen, die durch die Batterie hindurchgeht und über die ein Wärmeaustausch mit Bereichen der bzw. der Batterie möglich ist. Über das zweite Dreiwegeventil 71 und eine Leitung 73 wird das Kühlmittel zu dem Kühler 34 zurückgeführt. Um hier eine Bewegung des Kühlmittels in dem Kühlkreislauf vorzusehen, ist, wie bereits in den vorstehenden Ausführungsvarianten, auch hier eine Pumpe 10a vorgesehen, die hier bevorzugt durch einen Elektromotor 11 angetrieben wird, wobei andere Antriebsarten der Pumpe grundsätzlich möglich sind. Ebenso wie zu den beiden Ausführungsvarianten gemäß Figur 4 und 5 erläutert, kann auch bei dem Kühlkreislauf 7 über den Verdampfer 42 Wärme an das Kältemittel im Kältemittelkreis 2 abgegeben werden. Ebenso ist selbstverständlich auch ein Überbrücken des Verdampfers 42 über das Überbrückungsventil 36 möglich, wie dies für die beiden Ausführungsvarianten in den Figuren 2 und 3 vorstehend erläutert ist.

Der Heizkreislauf 8 ist so in den Kältemittelkreis 2 eingreifend vorgesehen, dass eine Wärmeaufnahme von dem ersten Kältemittelkühler 21 im Kälte- und im Wärmepumpen-Modus möglich ist. Die Batterie kann entsprechend mit dieser Wärme aus dem Kältemittelkühler 21 erwärmt werden.

Der Heizkreislauf 8 umfasst neben einer Leitung 80, die von einer Pumpe 10b zum Pumpen von Kühlmittel durch den Heizkreislauf 8 zu dem Kältemittelkühler 21 führt, wobei die Pumpe wiederum durch einen Elektromotor 11 angetrieben wird, eine Leitung 81, die von dem Kältemittelkühler 21 zu dem Dreiwegeventil 70 führt.

Sollen die Batterie bzw. die weiteren Komponenten des Fahrzeugs oder auch Fluidsysteme des Fahrzeugs nicht beheizt werden, ist eine Bypassleitung 82 vorgesehen, die mit einem Überbrückungsventil 83 versehen ist. Ist das Überbrückungsventil 83 offen, strömt das über den Kältemittelkühler 21 erwärmte Kühlmittel über das Überbrückungsventil 83 und eine Leitung 84 zu dem Heizungswärmetauscher 30. Entsprechend kann der Heizungswärmetauscher im Umluftbetrieb oder im Außenluftbetrieb, wie vorstehend bereits zu Figur 5 beschrieben, den Fahrzeuginnenraum 4 erwärmen, indem die diesem zugeführte Luft erwärmt wird. Über eine weitere Leitung 85 kann das Kühlmittel wieder zu der Pumpe 10 und durch die Leitung 80 zu dem Kältemittelkühler 21 zurückgelangen.

Soll zwar eine Erwärmung der Batterie, nicht jedoch des Fahrzeuginnenraumes erfolgen, wird das Überbrückungsventil 83 geschlossen und das Dreiwegeventil 70 in Richtung zu der Leitung 72a, die durch die Batterie führt, geöffnet und in Richtung zu der Leitung 72 geschlossen. Im Kühlbetrieb wird das Dreiwegeventil in Richtung der Leitung 82a geschlossen und in Richtung der Leitungen 72 und 72a geöffnet. Somit kann mittels des erwärmten Kühlmittels die Batterie bzw. die zu erwärmenden Komponenten des Fahrzeugs bzw. das zu erwärmende Fluidsystem des Fahrzeugs erwärmt werden. Das Dreiwegeventil 71 hinter der Batterie wird für die Rückführung des Kühlmittels von der Batterie zurück zur Pumpe 10 so geschaltet, dass über eine weitere Leitung 86 sowie ein weiteres Überbrückungsventil 87, das den Heizungswärmetauscher überbrückt, eine Rückführung auf die Rückführleitung 85 und somit zur Pumpe 10 und Leitung 80, entsprechend also auch dem Kältemittelkühler 21, ermöglicht wird.

Der Kältemittelkreis 2 ist im Prinzip entsprechend Figur 1 aufgebaut und kann auch in entsprechender Weise betrieben werden. Der Verdampfer 43 kann zum Kühlen des Fahrzeuginnenraumes, wie vorstehend bereits zu der Ausführungsform des Klimatisierungssystems gemäß Figur 1 beschrieben, verwendet werden.

Nicht nur die Pumpen 10 im Kühlkreislauf, Heizkreislauf sowie Temperierkreislauf werden durch einen Elektromotor betrieben, sondern vorteilhaft ebenfalls der Verdichter 20 des Kältemittelkreises 2, insbesondere bei einem rein elektromotorisch angetriebenen Fahrzeug. Durch das Vorsehen eines solchen elektromotorischen Antriebs für Pumpen und Verdichter ist eine besonders gute Eignung für Hybridfahrzeuge sowie Elektrofahrzeuge gegeben, wobei auch lediglich ein vergleichsweise geringer Energiebedarf für das Betreiben der Pumpen sowie des Verdichters erforderlich ist.

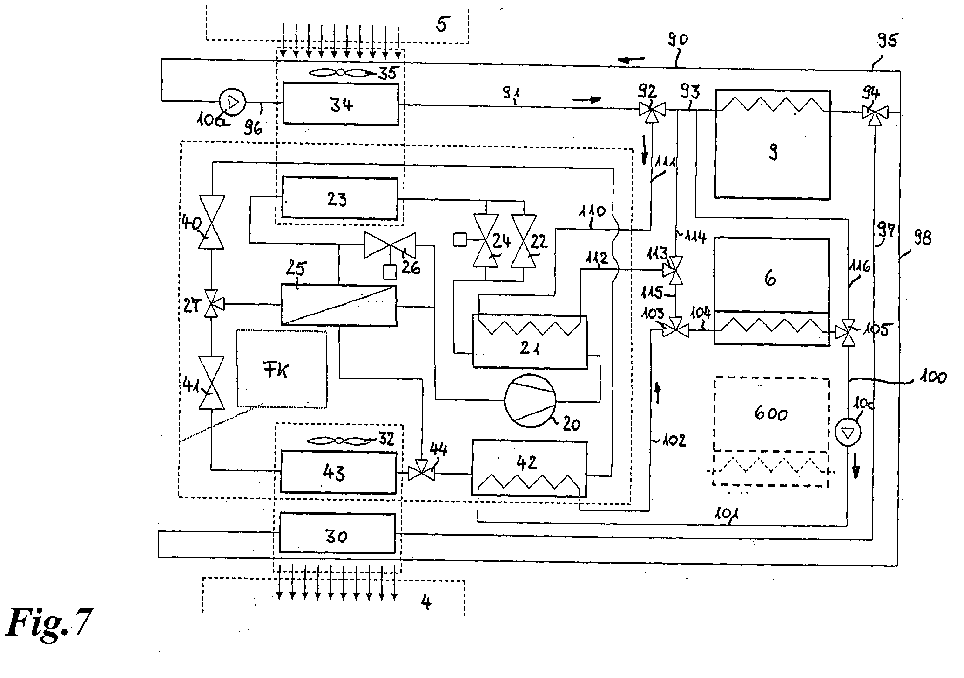

Figur 7 zeigt eine weitere Ausführungsform des Klimatisierungssystems 1, bei dem nun zwei Kühlkreisläufe bzw. Temperierkreisläufe vorgesehen sind, wobei dieser Aufbau insbesondere für ein Hybridfahrzeug geeignet ist, das Komponenten mit unterschiedlichen Temperaturniveaus umfasst. Entsprechend ist in den ersten Temperierkreislauf 90, der ein Motor-Temperierkreislauf ist, ein Verbrennungsmotor 9 eingeschlossen. Es führt somit in dem Motor-Temperierkreislauf 90 eine Leitung 91 von dem Kühler 34 zu einem Dreiwegeventil 92 und eine weitere Leitung 93 durch den Verbrennungsmotor 9 hindurch zu einem weiteren Dreiwegeventil 94. Eine weitere Leitung 95 führt von dem Dreiwegeventil 94 über eine Pumpe 10a, die elektromotorisch angetrieben ist, über eine weitere Leitung 96 zu dem Kühler 34 zurück. Über den Kühler kann somit das Kühlmittel des Motor-Temperierkreislaufs 90 über die Umgebungsluft gekühlt werden.

Der zweite Kühlkreislauf 100 ist für die Fahrzeugkomponenten, wie Batterie, Brennstoffzellen, Leistungselektronik, Fluidsysteme etc. vorgesehen, der von den ersten Temperierkreislauf 90 für den Verbrennungsmotor 9 getrennt ist. Da der Verbrennungsmotor mit Temperaturen von etwa 90 Grad Celsius arbeitet, insbesondere Batterien sowie die übrigen Komponenten des Fahrzeugs mit niedrigeren Temperaturen arbeiten, insbesondere mit Temperaturen von 15 Grad Celsius bis 35 Grad Celsius, sind diese beiden voneinander trennbaren Kühlkreisläufe bzw. Temperierkreisläufe bei einem Hybridfahrzeug sinnvoll. Der zweite Kühlkreislauf 100 umfasst den Verdampfer 42 des Kältemittelkreises 2. Der zweite Kühlkreislauf 100 weist eine Leitung 101 auf, die durch den Verdampfer 42 führt. Hinter dem Verdampfer ist diese Leitung als Leitung 102 fortgeführt. Sie führt in ein Dreiwegeventil 103, von dem eine durch hier beispielhaft die Batterie 6 führende Leitung 104 abzweigt. Hierüber ist ein Zuführen von abgekühltem Kühlmittel zu der Batterie bzw. den dieser in Reihe oder parallel geschalten Komponenten 600 des Fahrzeugs, wie insbesondere einer Brennstoffzelle, Leistungselektronik etc. möglich. Zum Zurückleiten des dann durch Wärmeaufnahme aus der Batterie erwärmten Kühlmittels ist ein weiteres Dreiwegeventil 105 vorgesehen und in Richtung der Pumpe 10c in dem zweiten Kühlkreislauf 100 geschaltet. Über den Verdampfer 42 ist, wie bereits vorstehend zu der Ausführungsform des Klimatisierungssystems 1 gemäß Figur 1 bzw. gemäß Figur 6 erläutert, eine Wärmeabgabe an den Kältemittelkreis 2 und somit ein Abkühlen des Kühlmittels im Kühlmittelkreislauf 100 zum Kühlen der Batterie sowie der weiteren Komponenten 600 des Fahrzeugs möglich.

In dem Kältemittelkreis 2 sind die beiden Verdampfer 42, 43 parallel geschaltet, wobei eine Rückführung des Kältemittels zu dem Verdichter 20 von den beiden Verdampfern 42, 43 über das Dreiwegeventil 44 geregelt wird. Ein Beheizen des Fahrzeuginnenraumes 4 erfolgt durch von dem Verbrennungsmotor 9 an das Kühlmittel in der Leitung 93 abgegebene Wärme, die über das Dreiwegeventil 94 dem Heizungswärmetauscher 30 zugeleitet werden kann, anstatt direkt in die Leitung 95 zu strömen. Die Zuleitung zu dem Heizungswärmetauscher 30 erfolgt dann also über eine Leitung 97. Von dem Heizungswärmetauscher führt eine weitere Leitung 98 zu der Leitung 95 des Motortemperierkreislaufs 90 zurück.

Soll der Fahrzeuginnenraum nicht beheizt, sondern vielmehr klimatisiert bzw. gekühlt werden, wird hierzu der Verdampfer 43 des Kältemittelkreises 2 bzw. der Fahrzeugklimaanlage verwendet, wobei, wie vorstehend bereits zu der Ausführungsform des Klimatisierungssystems gemäß Figur 1 und 5 beschrieben, ein Leiten von Kältemittel über das Expansionsventil 41 und die Leitung 53 zu dem Verdampfer 43 erfolgt.

Nicht nur ein Kühlen der Batterie bzw. der weiteren Komponenten des Hybridfahrzeugs ist möglich, sondern auch ein Beheizen von diesen Komponenten, hier in Figur 7 stellvertretend für diese durch die Batterie 6 gezeigt, nämlich über den Heizkreislauf 110. Grundsätzlich kann dieser nicht nur für die Fahrzeugkomponente, sondern auch für den Verbrennungsmotor 9 zu dessen Beheizen beispielsweise im Winter im Rahmen einer Standheizung dienen. Der Heizkreislauf 110 ist so ausgebildet, dass er eine Verbindung über die Leitung 93, die durch den Verbrennungsmotor hindurchführt, vorsehen kann. Das von dem Kühler 34, der im Fahrbetrieb des Verbrennungsmotor 9 kühlt, anströmende Kühlmittel kann über den Heizkreislauf 110 geleitet werden, in dem es durch den Kältemittelkühler 21 erhitzt wird, und nachfolgend über die Leitung 93 dem Verbrennungsmotor 9 zugeführt werden. Zu diesem Zweck zweigt von dem Dreiwegeventil 92 eine Leitung 111 des Heizkreislaufs 110 ab. Diese führt durch den Kältemittelkühler 21, um hier Wärme aus diesem aufzunehmen. Die Leitung führt als Leitung 112 zu einem Dreiwegeventil 113. Von diesem zweigt eine Leitung 114 in Richtung zur Leitung 93 ab und eine Leitung 115 in Richtung zum Dreiwegeventil 103. Beide Leitungen 114, 115 können optional geöffnet werden, wenn sowohl die Batterie bzw. die Komponenten des Fahrzeugs als auch der Verbrennungsmotor erwärmt werden sollen, beispielsweise beim Start im Winter. Es ist ferner möglich, beide Kühlkreisläufe durch eine entsprechende Einrichtung bzw. Ventilstellung zu trennen. Beispielsweise wenn Batterie 6 und Verbrennungsmotor 9 erwärmt werden sollen, wird dies üblicherweise nicht gleichzeitig der Fall sein, da ein Antriebsaggregat zum Anfahren des Fahrzeugs ausreicht, so dass z.B. zunächst der Verbrennungsmotor 9 erwärmt wird. Es kann also eine Prioritätsschaltung der Kreisläufe bzw. der zu beheizenden Komponenten hier vorgesehen werden.

Ist nachfolgend der Verbrennungsmotor ausreichend erwärmt oder sind nachfolgend die Batterie sowie die weiteren Komponenten des Fahrzeugs ausreichend erwärmt, kann die jeweilige Leitung 114 bzw. 115 über das Dreiwegeventil 113 verschlossen werden. Ein Zuleiten von erwärmtem Kühlmittel zu der Batterie bzw. den anderen Komponenten des Fahrzeugs ist über die Leitung 115, das Dreiwegeventil 103 sowie die Leitung 104 durch die Komponenten bzw. die Batterie hindurch zu dem Dreiwegeventil 105 möglich.

Von diesem wird das warme Kühlmittel nachfolgend über eine Leitung 116 zur Leitung 93 bzw. über entsprechend dort in der Anbindung an die Leitung 93 vorgesehene Dreiwegeventil gegebenenfalls direkt wieder zurück zum Dreiwegeventil 92 und die Leitung 111 geführt, um durch die von dem Kältemittelkühler 21 abgegebene Wärme erwärmt zu werden.

Beim Erwärmen der Batterie bzw. der anderen Komponenten des Fahrzeugs ist der Kühlmittelkreis 100 über die beiden Dreiwegeventile 103 und 105 abgeschaltet. Sollen weder der Verbrennungsmotor noch die Batterie bzw. die anderen Komponenten des Fahrzeugs erwärmt werden, kann das Dreiwegeventil 113 entsprechend von der Leitung 112 lediglich auf die Leitung 114 und diese im Bereich der Anbindung an die Leitung 93 über ein entsprechend dort ebenfalls vorgesehenes, in Figur 7 nicht eingezeichnetes weiteres Dreiwegeventil zum Dreiwegeventil 92 und von diesem auf die Leitung 111 geschaltet werden, so dass ein geschlossener Kreis ohne weitere Wärmeabnahme durch Verbrennungsmotor oder Batterie bzw. weitere Komponenten des Fahrzeugs erfolgt.

Es kann somit auch mit dieser Ausführungsform eines Klimatisierungssystems mit zwei Kühlkreisläufen bzw. Temperierkreisläufen und einem Heizkreislauf sowie dem wärmetechnisch hiermit verbundenen Kältemittelkreis eine Temperierung von Komponenten des Fahrzeugs, wie insbesondere der Batterie, Brennstoffzellen, Leistungselektronik etc. und des Verbrennungsmotors eines Hybridfahrzeugs sowie des Fahrzeuginnenraumes durch Zu- und Abschalten der einzelnen Kreisläufe und Komponenten des Klimatisierungssystems erfolgen.

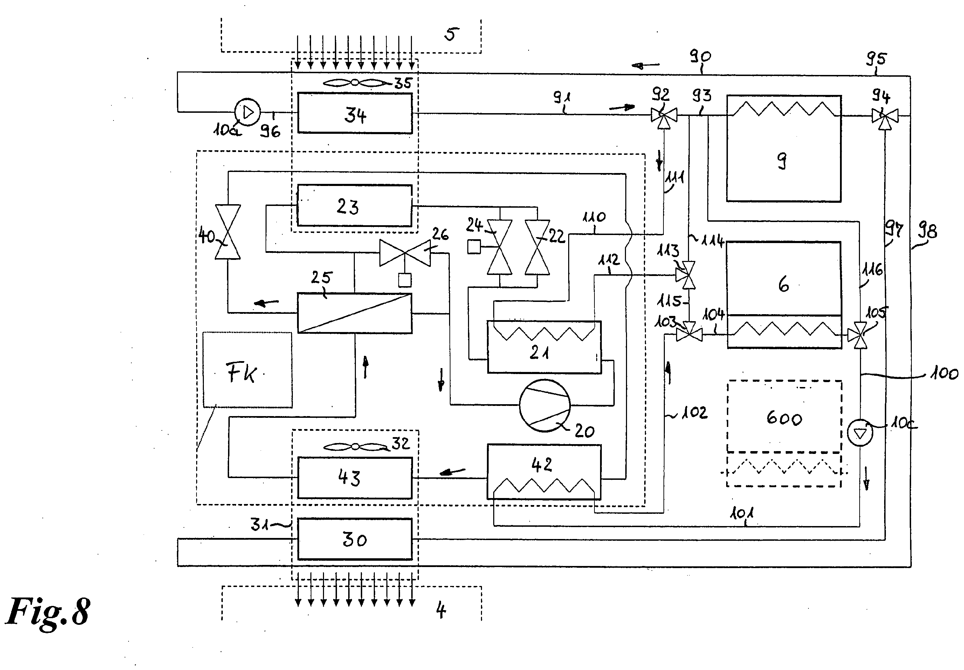

Figur 8 zeigt eine Variante zu dem Klimatisierungssystem gemäß Figur 7, wobei hier eine Reihenschaltung der beiden Verdampfer 42, 43 anstelle der Parallelschaltung in Figur 7 vorgesehen ist. Das durch Wärmeaufnahme aus dem Kühlmittelkreislauf 100 erwärmte Kältemittel im Verdampfer 42 wird an den Verdampfer 43 weitergeleitet, wobei in diesem eine weitere Wärmeaufnahme erfolgen kann, sofern dem Fahrzeuginnenraum Wärme entzogen werden soll, also die Heiz-/Kühleinheit 31 als Klimaanlage wirken soll, so dass weiter erwärmtes Kältemittel dem inneren Wärmetauscher 25 zugeführt wird. Von diesem kann das Kältemittel gegebenenfalls nach weiterer Wärmeaufnahme im inneren Wärmetauscher 25 dem Verdichter 20 zugeleitet werden, wie ansonsten zu den Figuren 1 bis 5 beschrieben. Da lediglich noch das eine Expansionsventil 40 hinter den inneren Wärmetauscher 25 vorgesehen ist, das Dreiwegeventil 27 jedoch entfällt, wird das Kältemittel nach Verlassen des Kältemittelkühlers 23, der als Verflüssiger oder Verdampfer wirken kann, je nachdem, ob das Expansionsventil 22 durch das Überbrückungsventil 24 überbrückt wird oder nicht (im Wärmepumpen-Modus), über den inneren Wärmetauscher 25 direkt dem Expansionsventil 40 zugeleitet. Von diesem gelangt das Kältemittel unter Niederdruck und mit niedriger Temperatur zu dem Verdampfer 42. In diesem ist wiederum eine Wärmeaufnahme aus der Kühlmittelkreislauf 100 möglich.

Im Vergleich zu der Ausführungsform gemäß Figur 7 ist die Ausführungsform gemäß Figur 8 mit der Reihenschaltung von Verdampfern 42 und 43 eine kostengünstigere Variante, da insbesondere das zweite Expansionsventil 41 sowie das Dreiwegeventil 27 entfallen können. Eine solche Lösung ist auch für die Ausführungsformen in den Figuren 1 bis 6 grundsätzlich möglich, um jeweils eine kostengünstigere Ausführungsform bei diesen vorzusehen.

Anstelle nur eines Kältemittelkühlers 21 können auch zwei Wärmetauscher vorgesehen und in Reihe geschaltet sein. Hierdurch ist dann eine bessere Trennung der Komponenten, z.B. des Verbrennungsmotors 9 und der Batterie 6, möglich.

Neben den in den Figuren dargestellten und im Vorstehenden beschriebenen Ausführungsvarianten von Klimatisierungssystemen 1 ist es grundsätzlich auch möglich, über den Kältemittelkreis 2 die Batterie 6 direkt zu temperieren, also unter Umgehen des Temperier-/Kühlkreislaufs bzw. Wärmeträgerkreislaufs 3. Jedoch sind hier zusätzliche Maßnahmen zu ergreifen, um den im Kältemittel herrschenden hohen Druck zum Durchleiten durch die Batterie zu vermindern, da dieser seitens der zu temperierenden Komponenten schlecht ertragen wird. Es können ferner zusätzlich zu den beschriebenen Ausführungsvarianten von Klimatisierungssystemen noch zahlreiche weitere gebildet werden, bei denen jeweils zumindest eine Einrichtung zur Wärmeübertragung an den Temperierkreislauf und zumindest eine Einrichtung zur Wärmeübertragung von dem Temperierkreislauf an den Kältemittelkreis vorgesehen sind. Die in den Figuren gezeigten und vorstehend beschrieben Ventilatoren, Ventilanordnungen und Leitungsführungen sind lediglich als beispielhaft für die Verbindung der einzelnen genannten Komponenten und Wärmetauscher des Klimatisierungssystems anzusehen. Es sind zum Erzielen einer Temperierung entsprechende andere Ausführungsvarianten möglich, ebenso wie das Entfernen und Trennen von Teilkreisläufen oder überbrückten Abschnitten, insbesondere Temperierkreisläufen, des Klimatisierungssystems, wobei stets jeweils zumindest eine Einrichtung zur Wärmeübertragung an den Temperierkreislauf und zumindest eine Einrichtung zur Wärmeübertragung von dem Temperierkreislauf an den Kältemittelkreis vorgesehen sind.

### Bezugszeichenliste

- 1: Klimatisierungssystem
- 2: Kältemittelkreis
- 3: Temperierkreislauf
- 4: Fahrzeuginnenraum
- 5: Umgebung
- 6: Batterie
- 7: Kühlkreislauf
- 8: Heizkreislauf
- 9: Verbrennungsmotor
- 10: Pumpe
- 10a: Pumpe
- 10b: Pumpe
- 10c: Pumpe
- 11: Elektromotor
- 20: Verdichter
- 21: erster Kältemittelkühler
- 22: erstes Expansionsventil
- 23: zweiter Kältemittelkühler/Kondensator
- 24: Überbrückungsventil
- 25: innerer Wärmetauscher
- 26: Überbrückungsventil
- 27: Dreiwegeventil
- 28: Leitung
- 29: Leitung
- 30: Heizungswärmetauscher
- 31: Heiz-/Kühleinheit
- 32: Ventilator
- 33: Überbrückungsventil
- 34: Kühler
- 35: Ventilator
- 36: Überbrückungsventil
- 37: Leitung
- 38: Überbrückungsventil
- 39: Überbrückungsventil
- 40: zweites Expansionsventil
- 41: drittes Expansionsventil
- 42: erster Verdampfer
- 43: zweiter Verdampfer
- 44: Dreiwegeventil
- 45: Leitung
- 46: Leitung
- 47: Leitung
- 48: Leitung
- 49: Leitung
- 50: Leitung
- 51: Leitung
- 52: Leitung
- 53: Leitung
- 60: Leitung
- 61: Leitung
- 62: Leitung
- 63: Leitung
- 64: Leitung
- 70: Dreiwegeventil
- 71: Dreiwegeventil
- 72: Leitung
- 72a: Leitung
- 73: Leitung
- 74: Leitung
- 80: Leitung
- 81: Leitung
- 82: Leitung
- 82a: Leitung
- 83: Überbrückungsventil
- 84: Leitung
- 85: Leitung
- 86: Leitung
- 87: Überbrückungsventil
- 90: erster Temperier-/Kühlkreislauf
- 91: Leitung
- 92: Dreiwegeventil
- 93: Leitung
- 94: Dreiwegeventil
- 95: Leitung
- 96: Leitung
- 97: Leitung
- 98: Leitung
- 100: zweiter Kühlkreislauf
- 101: Leitung
- 102: Leitung
- 103: Dreiwegeventil
- 104: Leitung
- 105: Dreiwegeventil
- 110: Heizkreislauf
- 111: Leitung
- 112: Leitung
- 113: Dreiwegeventil
- 114: Leitung
- 115: Leitung
- 116: Leitung
- 600: Komponente
- 601: Komponente (Fluidsystem)
- A: Punkt hinter Verdichter 20
- E: Punkt hinter erstem Kältemittelkühler 21
- C: Punkt hinter erstem Expansionsventil 22
- D: Punkt hinter zweitem Kältemittelkühler 23
- E: Punkt vor Verdichter 20
- F: Punkt hinter zweitem Expansionsventil 40
- G: Punkt hinter erstem Verdampfer 42
- FK: Fahrzeugklimaanlage

## Patentansprüche

1. Klimatisierungssystem (1) für ein Fahrzeug mit zumindest einem Kältemittelkreis (2) und zumindest einem Temperierkreislauf (3,7,8,90,100,110) zum Temperieren eines Fahrzeuginnenraums (4) und zumindest einer Fahrzeugkomponente (6,600,601), insbesondere eines Elektro- oder Hybridfahrzeugs, wobei zumindest eine Einrichtung (42) zur Wärmeaufnahme von dem Temperierkreislauf (3,7,8,90,100,110) und zumindest eine Einrichtung (21) zur Wärmeabgabe an den Temperierkreislauf (3,7,8,90,100,110) vorgesehen sind,
wobei die Einrichtung zur Wärmeaufnahme von dem Temperierkreislauf ein niederdruckseitiger Wärmeübertrager (42) und/oder die Einrichtung zur Wärmeabgabe an den Temperierkreislauf ein hochdruckseitiger Wärmeübertrager (21) des zumindest einen Kältemittelkreises (2) ist,
**dadurch gekennzeichnet, dass**
der Temperierkreislauf zwei Kühlkreisläufe (90,100) umfasst zum Betreiben von Komponenten (6,9,600,601) eines Fahrzeugs auf unterschiedlichen Temperaturniveaus und eine Parallelschaltung zweier Verdampfer (42,43) des zumindest einen Kältemittelkreises (2) vorgesehen ist.

2. Klimatisierungssystem (1) nach Anspruch 1,
**dadurch gekennzeichnet, dass**
der niederdruckseitige Wärmeübertrager (42) zur Wärmeaufnahme von den Temperierkreislauf ein Verdampfer ist.

3. Klimatisierungssystem (1) nach Anspruch 1 oder 2,
**dadurch gekennzeichnet, dass**
zumindest eine Einrichtung (24,26,36,38,39,33,83,87) zum Zu- und Abschalten zumindest einer Komponente (6,21,25,30,42) und/oder eines Teilkreislaufs oder Kreislaufs des Klimatisierungssystems (1) vorgesehen ist, insbesondere zumindest ein Überbrückungsventil und/oder Mehrwegeventil und/oder eine Bypassleitung.

4. Klimatisierungssystem (1) nach einem der vorstehenden Ansprüche,
**dadurch gekennzeichnet, dass**
eine oder mehrere Pumpen (10) und ein oder mehrere Verdichter (20) elektrisch betreibbar oder angetrieben sind.

5. Klimatisierungssystem (1) nach einem der vorstehenden Ansprüche,
**dadurch gekennzeichnet, dass**
ein in dem Kältemittelkreis (2) verwendbares Kältemittel ausgewählt ist aus CO₂, einem Hydrofluoroolefin, einem Tetrafluorethan.

6. Verfahren zum Temperieren von Fahrzeugkomponenten unter Verwendung zumindest eines Kältemittelkreises (2) und zumindest eines Temperierkreislaufs (3,7,8,90,100,110), nach einem der Ansprüche 1-5,
**dadurch gekennzeichnet, dass**
der Temperierkreislauf zwei Kühlkreisläufe (90,100) umfasst zum Betreiben von Komponenten (6,9,600,601) eines Fahrzeugs auf unterschiedlichen Temperaturniveaus, wobei Wärme aus dem Temperierkreislauf auf der Niederdruckseite des Kältemittelkreises in diesen aufgenommen wird und Wärme an den Temperierkreislauf auf der Hochdruckseite des Kältemittelkreises von diesem abgegeben wird.

7. Fahrzeug mit zumindest einem Klimatisierungssystem nach einem der Ansprüche 1 bis 5.

## Claims

1. Climate control system (1) for a vehicle having at least one refrigerant circuit (2) and at least one temperature control circuit (3,7,8,90,100,110) for controlling the temperature of a vehicle interior (4) and at least one vehicle component (6,600,601), in particular of an electric vehicle or hybrid vehicle, wherein at least one device (42) for absorbing heat from the temperature control circuit (3,7,8,90,100,110) and at least one device (21) for releasing heat to the temperature control circuit (3,7,8,90,100,110) are provided,
wherein the device for absorbing heat from the temperature control circuit is a low-pressure side heat exchanger (42) and/or the device for releasing heat to the temperature control circuit is a high-pressure side heat exchanger (21) of the at least one refrigerant circuit (2),
**characterised in that**
the temperature control circuit comprises two cooling circuits (90,100) for operating components (6,9,600,601) of a vehicle at different temperature levels, and a parallel connection of two evaporators (42,43) of the at least one refrigerant circuit (2) is provided.

2. Climate control system (1) according to claim 1,
**characterised in that**
the low-pressure side heat exchanger (42) for absorbing heat from the temperature control circuit is an evaporator.

3. Climate control system (1) according to claim 1 or 2,
**characterised in that**
at least one device (24,26,36,38,39,33,83,87) for connecting and disconnecting at least one component (6,21,25,30,42) and/or a subcircuit or circuit of the climate control system (1) is provided, in particular at least one bridging valve and/or multi-way valve and/or a bypass line.

4. Climate control system (1) according to one of the preceding claims,
**characterised in that**
one or more pumps (10) and one or more compressors (20) can be electrically operated or driven.

5. Climate control system (1) according to one of the preceding claims,
**characterised in that**
a refrigerant which can be used in the refrigerant circuit (2) is selected from CO₂, a hydrofluoroolefin, a tetrafluoroethane.

6. Method for controlling the temperature of vehicle components using at least one refrigerant circuit (2) and at least one temperature control circuit (3,7,8,90,100,110), according to one of claims 1-5,
**characterised in that**
the temperature control circuit comprises two cooling circuits (90,100) for operating components (6,9,600,601) of a vehicle at different temperature levels, wherein heat is absorbed from the temperature control circuit into the refrigerant circuit on the low-pressure side of the refrigerant circuit and heat is released to the temperature control circuit by the refrigerant circuit on the high-pressure side of the refrigerant circuit.

7. Vehicle having at least one temperature control system according to one of claims 1 to 5.

## Revendications

1. Système de climatisation (1) pour un véhicule comprenant au moins un circuit de réfrigérant (2) et au moins un circuit de régulation de température (3, 7, 8, 90, 100, 110) servant à réguler la température de l'habitacle (4) d'un véhicule et au moins un composant de véhicule (6, 600, 601), en particulier d'un véhicule électrique ou hybride, dans lequel sont prévus au moins un dispositif (42) servant à absorber la chaleur provenant du circuit de régulation de température (3, 7, 8, 90, 100, 110) et au moins un dispositif (21) servant à dissiper la chaleur au niveau du circuit de régulation de température (3, 7, 8, 90, 100, 110),
dans lequel le dispositif servant à absorber la chaleur provenant du circuit de régulation de température est un échangeur de chaleur (42) situé côté basse pression et/ou le dispositif servant à dissiper la chaleur au niveau du circuit de régulation de température est un échangeur de chaleur (21), situé côté haute pression, de l'au moins un circuit de réfrigérant (2),
**caractérisé en ce que**
le circuit de régulation de température comprend deux circuits de refroidissement (90, 100) servant à faire fonctionner des composants (6, 9, 600, 601) d'un véhicule à des niveaux de température différents, et un branchement parallèle de deux évaporateurs (42, 43) de l'au moins un circuit de réfrigérant (2) est prévu.

2. Système de climatisation (1) selon la revendication 1,
**caractérisé en ce que**
l'échangeur de chaleur (42) situé côté basse pression servant à absorber la chaleur provenant du circuit de régulation de température est un évaporateur.

3. Système de climatisation (1) selon la revendication 1 ou 2,
**caractérisé en ce que**
au moins un dispositif (24, 26, 36, 38, 39, 33, 83, 87) est prévu afin d'activer et de désactiver au moins un composant (6, 21, 25, 30, 42) et/ou un circuit partiel ou un circuit du système de climatisation (1), en particulier au moins une vanne d'interdiction et/ou une vanne à plusieurs voies et/ou une conduite de dérivation.

4. Système de climatisation (1) selon l'une quelconque des revendications précédentes,
**caractérisé en ce que**
une ou plusieurs pompes (10) et un ou plusieurs compresseurs (20) peuvent fonctionner ou sont entraînés de manière électrique.

5. Système de climatisation (1) selon l'une quelconque des revendications précédentes,
**caractérisé en ce que**
qu'un réfrigérant pouvant être utilisé dans le circuit de réfrigérant (2) est choisi parmi le CO₂, une hydrofluorooléfine, un tétrafluoroéthane.

6. Procédé servant à réguler la température de composants de véhicule en utilisant au moins un circuit de réfrigérant (2) et au moins un circuit de régulation de température (3, 7, 8, 90, 100, 110) selon l'une quelconque des revendications 1 - 5,
**caractérisé en ce que**
le circuit de régulation de température comprend deux circuits de refroidissement (90, 100) servant à faire fonctionner des composants (6, 9, 600, 601) d'un véhicule à des niveaux de température différents, dans lequel la chaleur issue du circuit de régulation de température est absorbée dans le circuit de réfrigérant sur le côté basse pression de ce dernier et la chaleur est dissipée par le circuit de réfrigérant au niveau du circuit de régulation de température sur le côté haute pression du circuit de réfrigérant.

7. Véhicule comprenant au moins un système de climatisation selon l'une quelconque des revendications 1 à 5.
